Europäisches Patentamt

European Patent Office

Office européen des brevets

(11) Publication number: 0 678 678 A1

## EUROPEAN PATENT APPLICATION

(21) Application number: 94103171.8

(51) Int. Cl.⁶: F16B 33/02

(22) Date of filing: 03.03.94

(43) Date of publication of application:
25.10.95 Bulletin 95/43

(84) Designated Contracting States:
AT BE CH DE DK ES FR GB LI NL

(71) Applicant: DERK S.p.A.
Via Gobetti 1/3
I-20094 Buccinasco (Province of Milan) (IT)

(72) Inventor: Melli, Mariano
Via Buonarroti 1
I-20094 Buccinasco (Milan) (IT)

(74) Representative: Gervasi, Gemma, Dr. et al
NOTARBARTOLO & GERVASI Srl
Viale Bianca Maria 33
I-20122 Milano (IT)

(54) Universal screw obtained by rolling.

(57) It is described a screw, obtained by rolling, which is called "universal" because it presents such geometrical features (diameter and length of screw, pitch and shape of thread, etc.) to consent it to operate with a plurality of relatively stout support materials.

FIG. 1

## Field of invention

The invention consists in a screw, obtained by rolling, which is called "universal", because it presents such geometrical features (diameter and length of screw, pitch and shape of thread, etc.) to consent it to operate in an optimal way with a plurality relatively stout support materials (such as, for instance, hardwood, chipboard panels, thermoplastic materials, plaster panel board, or aluminium or other equivalent metal) thus fully sustituting existing commercial screws, each of which is specifically studied to operate with one of the above support materials.

## State of the Art

To fasten an object on a support of relatively stout material (such as, for instance, hardwood, chipboard panels, thermoplastic materials, plaster panel board, aluminium or other equivalent metal) many kinds of screws are known and commonly sold, obtained by rolling of a metallic wire; depending on the mechanical characteristics of each of the above support materials, a specific type of screw (or a "family" of screws) was designed and produced, whose geometric characteristics (diameter and length, pitch and shape of thread, etc.) are such to optimally operate in connection with the support material for which the specific screw was designed for.

Thus, to each kind of support material corresponds a specific kind of screw, which does imply (or could imply) a number of technical and organization problems due to the necessity of buying, storing and eventually distributing to the users a plurality of different and non interchangeable screws.

The producing process of screws by rolling, the thread chasers and the machinery used in such a process an known and commonly used since longtime; the geometrical characteristics of each type of screw, of the metallic wire from which the screws an obtained and the thread chasers used to produce them are codified by national and/or international standards (UNI, ASA, DIN standards, etc.) well known to any expert in the field.

Since such known screws are produced from a metal wire, the core zone comprised between two adjacent spires of the thread presents a substantially cylindrical shape and is preferably smoothed during the final steps of the rolling process to avoid, or at least reduce, the friction which would hinder the advancement of the screw into the support.

Well known are also screws intended to operate with relatively soft support materials (wood screws and the like), which have a conically shaped core, but such screws, being produced by turning and/or other equivalent process, different from rolling, are outside the scope of present invention.

A screw produced according to present invention permits to obviate the above mentioned technical and organizational problems, in that it can be advantageously utilized for many kinds of relatively stout support materials, comprising the ones above mentioned in a purely exemplificatory way.

## Summary of the invention

It is object of present invention an universal screw, obtained by rolling, which comprises a head, a core on whose surface it is machined at least a thread having a triangularly shaped profile, and a terminal zone (hereinafter: point); such a screw is characterized in that:
- each of the core parts comprised between two adjacent spires of the thread has a frustoconical shape;
- the upper face of the thread forms a very small angle with the intersection plane between the thread and the frustoconical zone above it;
- the thread profile is shaped as a scalene triangle, in which the angle formed at the thread tip by the upper and lower faces of the thread is an acute angle;
- the surface of each of the frustoconical zones of the core is inclined by a very small angle with respect to the symmetry axis of the screw.

## List of figures

The invention will be now better described with reference to the non-limiting realization examples, shown in the enclosed drawings, in which
- Figure 1 diagrammatically shows an universal screw according to the invention;
- Figure 2 diagrammatically shows an universal screw similar to the one of Fig.1, from which it differs solely for the different slant of each of the frustoconical zones 1 comprised between two adjacent spires 2 of the thread 3.

## Detailed description

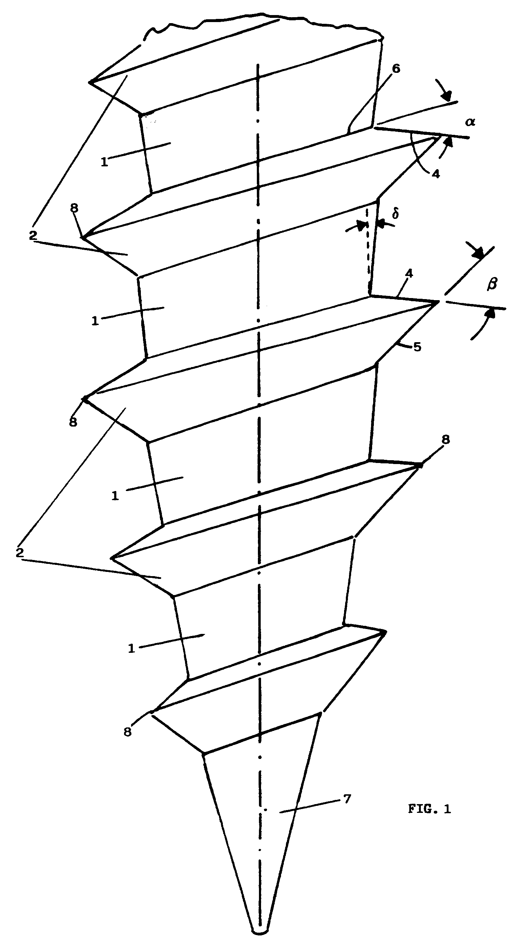

Figure 1 diagrammatically shows the terminal part of an universal screw according to the invention, from which the following characterizing aspects can be derived:
- each zone 1 of the core, comprised between two adjacent spires 2 of the thread 3, has a frustoconical shape; the apex of each of the said frustoconical zones 1 is directed towards the point 7 of the screw;
- the upper face 4 of the thread 3 forms a very small angle $\alpha$ with the intersection plane 6 between the thread 6 and the frustoconical zone 1 above it;
- the profile of thread 3 is shaped as a scalene triangle, and has an acute angle $\beta$ corresponding to the tip 8 of the thread 3;
- the surface of each frustoconical zone 1 is inclined by a very small angle $\delta$ with respect to the symmetry axis of the screw.

The values of such angles are: $4° \leq \alpha \leq 10°$, $30° \leq \beta \leq 40°$, $3° \leq \delta \leq 7°$; in a preferred embodiement are: $\alpha = 7°$, $\beta = 35°$ e $\delta = 5°$.

The pitch of the thread 3 of a screw according to the invention is in relationship (well known by a person skilled in the art) to the diameter and to the kind of the screw to which said thread 3 is designed for.

As known, the material displaced by thread 3 (and particularly by its tip 8) during the advance of the screw into the support tends to "accumulate" in the zones 1 of the core comprised between two adjacent spires 2 of the thread 3, exerting a pressure on said zones 1: by inclining the surface of each of said zones 1 of a very small angle $\delta$ with respect to the symmetry axis of the screws, each of said zones 1 takes a frustoconical shape which improves the tensil strength of the screw without appreciably rising the friction, as well as other possible forces, which would hinder the advancement of the screw into the support.

The very small angle $\alpha$ between the upper face 4 of the thread 3 and the intersection plane 6 between thread 3 and the frustoconical zone 1 above it, permits to reduce (during the insertion of the screw into the support) the reaction force component, parallel to the screw axis, which hinders the advancement of the screw, itself into the support; moreover, the upper face 4 of thread 3 is almost horizontal, which contributes to improve the stripping resistance of the screw.

Lastly, the scalene triangle shape of the profile of thread 3, and the fact that its tip 8 presents an acute angle $\beta$, permits to confer to the lower part 5 of the thread 3 a somewhat accentuated conicity, thus permitting to obtain (during the insertion of the screw into the support) a reaction force whose component parallel to the screw axis, of relevant intensity, aids the advancement of the screw into the support; the acute angled tip 8 more easily separates the fibres of the support, further aiding the penetration and the advancement of the screw in the support.

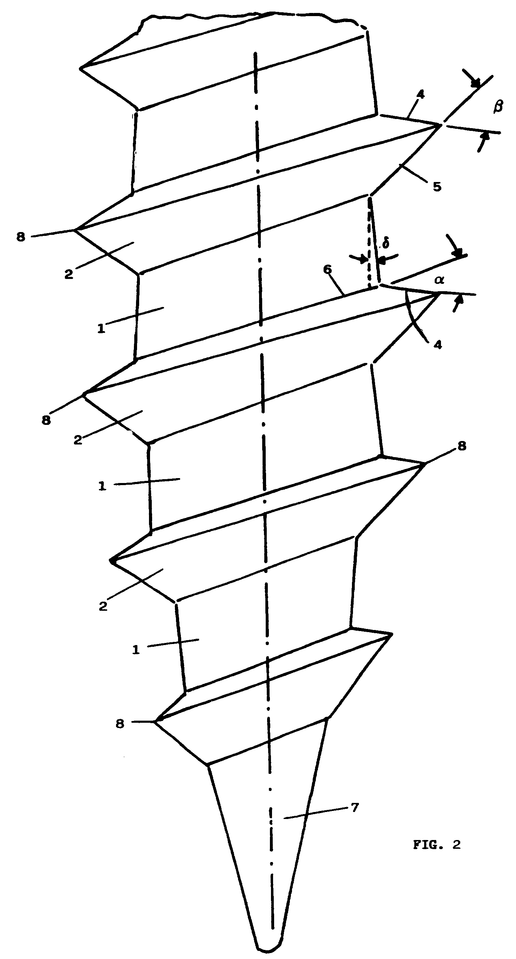

Figure 2 diagrammatically shows an universal screw, according to the invention, which has all the geometric characteristics hereinabove described with reference to the screw of Figure 1, and identified in Figure 2 with the same numerals; such screw differs from the one shown in Figure 1 solely in that the apex of each of the frustoconical zones 1 comprised between two adjacent spires 2 of the thread 3 is directed towards the head of the screw rather than towards its point 7.

As above noted, a screw according to the invention can be advantageously utilized in connection to many kinds of relatively stout support materials; such universal screw cannot be used, however, in connection to very hard and compact materials, such as, for istance, iron, concrete, marble, etc.

In the embodiment examples illustrated in the Figures, the screw has the usual pseudo-conical point 7; still remaining under the scope of the present invention, it is possible to give, at least to the terminal part of point 7, a square cross-section (possibly with a pyramid shape) which, acting as a gimlet, crumbles the support material facilitating the advancement of the screw into the support.

Always without going outside the scope if the invention, it is possible for a person skilled in the art to impart to the universal screws according to this description, obtained by rolling, any further modification and improvement suggested by the normal experience and by the natural evolution of the technique.

## Claims

1. Universal screw produced by rolling, comprising a head, a core on the surface of which at least a thread (3) is machined having a triangularly shaped profile and a terminal zone or point (7) characterized in that:
   - each zone (1) of said core laying between two adjacent spires (2) of said thread (3) has a frustoconical shape;
   - the upper face (4) of said thread (3) forms a very small first angle ($\alpha$), with the intersection plane (6) between said thread (3) and said upper frustoconical zone (1);
   - at the tip (8) of said thread (3), shaped as a scalene triangle, the upper face (4) of said thread (3) forms with the lower face (5) of same thread (3) a second angle ($\beta$), said second angle ($\beta$) being acute;
   - the surface of each of said frustoconical zones (1) forms a third angle ($\delta$) with the symmetry axis of the thread, said third angle ($\delta$) being very small.

2. Screw according to claim 1, characterized in that the value of said first, second and third angle respectively have the following variation

fields:

$$4° \leq \alpha \leq 10°; 30° \leq \beta \leq 40°; 3° \leq \delta \leq 7°$$

3. Screw according to claim 2, characterized in that said first, second and third angle have respectively the following value:

$$\alpha = 7°; \beta = 35°; \delta = 5°$$

4. Screw according to claim 1, characterized in that the apex of each of said frustoconical zones (1) is directed towards the head of said screw.

5. Screw according to claim 1, characterized in that the apex of each of said frustoconical zones (1) is directed towards the point (7) of said screw.

6. Screw according to claim 1, characterized in that at least terminal part of said point (7) has a square cross-section.

7. Screw according to claim 6, characterized in that said terminal part of said point (7) is shaped as a pyramid.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | FR-A-2 689 944 (SOCIETE GENERALE DE FORGEAGE DECOLLETAGE) * claims 1-3 * --- | 1-7 | F16B33/02 |
| A | GB-A-2 232 219 (UNIFIX LTD.) * abstract; claim 1 * ----- | 1 | |

TECHNICAL FIELDS SEARCHED     (Int.Cl.6)

F16B

The present search report has been drawn up for all claims

| Place of search | Date of completion of the search | Examiner |
|---|---|---|
| BERLIN | 26 August 1994 | Schaeffler, C |